# EUROPEAN PATENT SPECIFICATION

(11) **EP 3 359 859 B1**
(45) Date of publication and mention of the grant of the patent: **03.11.2021**
(21) Application number: 16853971.6
(22) Date of filing: 21.09.2016
(51) Int. Cl.: F16L 13/14, F16L 33/207, F16L 15/08, F16L 21/06

(54) **PIPE FITTING ASSEMBLY**
ROHRANSCHLUSSANORDNUNG
ENSEMBLE DE RACCORDEMENT DE TUYAU

(30) Priority: 07.10.2015 NZ 15713034
(43) Date of publication of application: 15.08.2018
(73) Proprietor: Picton Holdings Limited, Auckland 2141 (NZ)
(72) Inventor: PICTON, David John, 2141 Auckland (NZ)
(74) Representative: Bridle, Andrew Barry
(86) International application number: PCT/NZ2016/050152
(87) International publication number: WO 2017/061877

(56) References cited:
- EP-A2- 1 607 669
- DE-A1- 3 045 533
- DE-A1- 3 045 533
- GB-A- 2 318 846
- SE-C1- 148 792
- US-A- 3 224 794
- US-A- 3 224 794

## Description

### FIELD OF THE INVENTION

This invention relates to a pipe fitting assembly, and in particular, but not exclusively to a pipe fitting assembly for joining pipes made of plastics materials.

### BACKGROUND OF THE INVENTION

For some time it has been common to use plastic water pipes for general plumbing use in the building industry. Typically PVC or Polybutylene pipes are used.

For quick and reliable joints, fittings have been designed for use with these plastic pipes. The fittings generally fit inside the plastic pipe, and the plastic pipe is squeezed onto ridges on the exterior of the fitting to produce a water tight and robust joint. Document DE3045533A1 or US3224794A discloses such kind of fitting.

The squeeze is generally produced by a swageable metal sleeve or collar, which is secured at one end to the fitting during manufacture and cannot be removed by the plumber. This metal sleeve or collar obscures the ridges preventing the plumber form seeing if the pipe is pushed fully home. After the pipe is pushed onto the tail, the collar is swaged over the pipe to squeeze the pipe onto the fitting. The sleeves or collars are often made from a swageable metal such as a soft aluminium alloy, pure aluminium, or in some cases copper. The swaging is carried out in the field using a purpose-made swaging tool.

In the most part this produces a water tight and reliable joint. However, experience has shown that some installers do not push the plastic pipe far enough onto the fitting before swaging the metal retaining collar, or the plastic pipe is allowed to slip off the fitting a little. The collar makes it impossible to see the end of the pipe, and therefore it is not possible to see if it has been pushed on far enough, or if it has slipped off a little. And if the pipe is not fully home before it is swaged, the joint will be weaker, and in some cases it will leak or fail.

The problem is exacerbated by the fact that many plumbing joints are made in difficult access situations, for example under sink benches, under floors, in wall cavities, etc. These tight, awkward, sometimes dark, or otherwise difficult situations make it hard for the installer to see whether the pipe and the fitting have been mated together properly. The installer often has to work by feel, and it is often difficult to tell by feel just how far the pipe has been pushed onto the fitting.

Previous attempts to solve this problem have included an 'indicator ring' which is simply another ridge about the circumference of the fitting, but situated close to the location where the end of the pipe sits when properly fitted onto the fitting. New Zealand patent 627262 describes such a fitting. The indicator ring is intended to provide feel to the installer, to show that the pipe has been pushed far enough onto the fitting.

However, in practice, it is difficult to tell whether the pipe has been pushed fully home on the fitting, or if it has simply butted up against the indicator ring.

Also, it is difficult to be certain as to whether the increased resistance to movement is simply because the pipe has engaged one of the other ridges on the fitting, that is the ridges formed to help produce a leak resistant seal when the collar is swaged, or of it has reached the 'indicator ring'. The consequence of making this mistake is likely to be a leaky joint.

And since these plumbing joints are often embedded within the walls and structure of a building, a failed joint can be inconvenient and costly to repair. In addition, a failed joint in a mains water system, within a building structure, can cause damage, particularly if the leak is not detected for some time.

In this specification unless the contrary is expressly stated, where a document, act or item of knowledge is referred to or discussed, this reference or discussion is not an admission that the document, act or item of knowledge or any combination thereof was at the priority date, publicly available, known to the public, part of common general knowledge; or known to be relevant to an attempt to solve any problem with which this specification is concerned.

### OBJECT OF THE INVENTION

It is therefore an object of the present invention to provide a pipe fitting assembly which will at least go some way towards overcoming one or more of the above mentioned problems, or at least provide the public with a useful choice.

### STATEMENTS OF THE INVENTION

Accordingly, in a first aspect, the invention consists in a pipe fitting assembly according to the technical features of claim 1.

Preferably the outside diameter of the or each threaded section is greater than the outside diameter of the or each circumferential ridge.

Preferably the outside diameter of the or each threaded section is in the range of 1.5 to 4.0 percent greater than the outside diameter of the or each circumferential ridge.

Preferably the thread form of the or each threaded section has a relatively sharp crest.

Preferably the thread form of the or each threaded section is an asymmetric thread form.

Preferably the thread form of the or each threaded section, when viewed in cross section, has a first face which faces toward the free end of its associated tail section, the first face lying at an angle of between fifteen degrees and sixty degrees to the principal axis of the associated tail section.

Preferably the thread form of the or each threaded section, when viewed in cross section, has a second face which faces away from the free end of its associated tail section, the second face lying at an angle of between eighty degrees and ninety degrees to the principal axis of the associated tail section.

Preferably the threaded section of each tail section is adjacent to a shoulder of the associated tail section.

Preferably the shoulder of the or each tail section is formed where the outside diameter of the tail section abruptly increases from a dimension similar to the inside diameter of a pipe to be connected to the pipe fitting assembly to a dimension similar to the outside diameter of the pipe.

Preferably the pipe fitting assembly is a connector, an elbow fitting, or a tee fitting. Preferably the or each tail section is hollow.

In a second aspect, the invention consists in a method of fitting a pipe to a pipe fitting assembly according to the method steps of claim 12.

Preferably the method includes monitoring the amount of rotation of the pipe relative to the pipe fitting assembly once the pipe has engaged with the threaded section and before it is felt that the pipe butts against a shoulder of the tail section.

Preferably the method also includes the step of attempting to pull the pipe off the tail section of the pipe fitting to ensure that positive engagement has been achieved, prior to swaging the collar.

### DESCRIPTION

Further aspects of the present invention will become apparent from the following description which is given by way of example only and with reference to the accompanying drawings in which:
**FIGURE 1** is a plan view of a body of a pipe fitting assembly according to the present invention,
**FIGURE 2** is a cross sectional view of the body of the pipe fitting assembly, and within this view detail "F" is identified,
**FIGURE 3** is an end elevation of the body of the pipe fitting assembly,
**FIGURE 4** is a view of detail "F" (as defined in Figure 2) showing a thread form of a threaded section of the pipe fitting assembly, and
**FIGURE 5** is a cross sectional view of the pipe fitting assembly with a pipe fitted to one end.

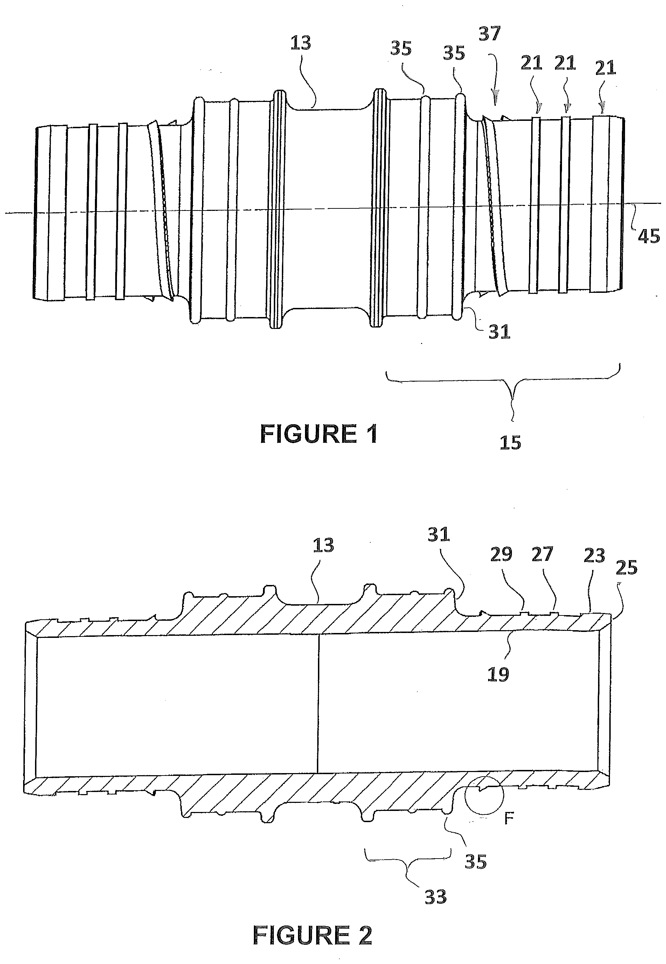

With reference to **Figures 1** to **5****,** a pipe fitting assembly (11) according to the present invention will now be described. The pipe fitting assembly (11) is made from a plastics material or a metal, and is designed primarily for use with plastic pipes that are typically used in the cold and hot water pipe-work of plumbing systems in domestic dwellings and light industrial applications.

In the example shown the pipe fitting assembly (11) is a connector for joining pipes of the same diameter. The pipe fitting assembly (11) has a body (13) which includes two opposing hollow tail sections (15), each configured to engage with a pipe (18) of a plumbing installation.

This type of fitting is typically used to connect pipes having a diameter in the range of twelve to twenty five millimetres in diameter. The fittings are generally forty to sixty millimetres long, and the pipe pushes on to the tail sections (15) of the fittings by about 15 to 25 millimetres.

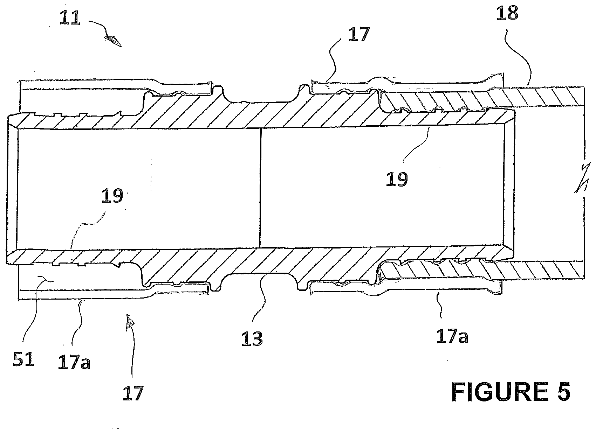

The pipe fitting assembly also has a swageable collar (17) associated with each tail section (15) - refer to **Figure 5**. The collars (17) are secured to the body (13) with a swaged joint, and are positioned and configured in such a manner that they can be further swaged to secure a pipe (18) onto each tail section (15). Each swageable collar (17) is about twenty to thirty millimetres in length and is made from an aluminium alloy, or pure aluminium, but can also be made from copper or other softer metals or metal alloys.

Each of the collars (17) is initially swaged at one end to the body (13) of the pipe fitting assembly (11) during manufacture. A free end (17a) of each collar (17) is swaged over a pipe (18), in the field, when the pipe fitting assembly (11) is used to join pipes together in a plumbing installation.

It can be seen in **Figure 1****,** in particular, that each tail section (15) includes a tubular body (19) having three circumferential ridges (21).

A first circumferential ridge (23) is situated adjacent to a free end (25) of the tail section (15). The first circumferential ridge (23) has a bevelled edge leading to the free end (25), and a square edge on the opposite side of the ridge (23). A second and a third circumferential ridge (27 and 29) each have square edges and are spaced apart inboard of the first circumferential ridge (23).

The circumferential ridges (21) are configured to provide a leak resistant seal between the pipe fitting assembly (11) and a pipe when the collar (17) of the respective tail section (15) is swaged. As the collar (17) is swaged, the inside diameter of the pipe is pressed firmly against the circumferential ridges (21).

The tail sections also include a shoulder (31) where the diameter of the tail section (15) abruptly increases from a diameter that is similar to the inside diameter of a pipe to be connected to the fitting (11), to a diameter that is similar to the outside diameter of the pipe. Further inboard of the shoulder (31) of each tail section (15) is a cylindrical region (33) on the body (13), having its own rounded circumferential ridges (35) upon which the collar (17) is secured by swaging also. A collar (17) is swaged to each of the cylindrical regions (33) when the pipe fitting assembly (11) is originally manufactured.

It can be seen also that the tail sections (15) both include a threaded section (37). The threaded section (37) of each tail section (15) is adjacent to the shoulder (31) of the associated tail section (15), and is between the circumferential ridges (21) and the shoulder (31) in each case. The circumferential ridges (21) are situated between the threaded section (37) and the free end (25) of the tail section (15).

The outside diameter of the threaded sections (37) is a little greater than the outside diameter of the circumferential ridges (21). The threaded sections (37) are configured to; engage with the pipe (18), and to provide a distinctive feel as the pipe engages and is drawn onto the threaded sections (37) when turned, and to hold the pipe (18) during installation and prior to swaging.

The outside diameter of the thread of the threaded section (37) is in the range of 1.5 to 4.0 percent greater than the outside diameter of the circumferential ridges (21). For example, with a pipe fitting assembly (11) sized for use with approximately 18 millimetre (mm) inside diameter pipe, the outside diameter of the thread is ideally about 0.4.to 0.5 mm greater than the outside diameter of the circumferential ridges (21).

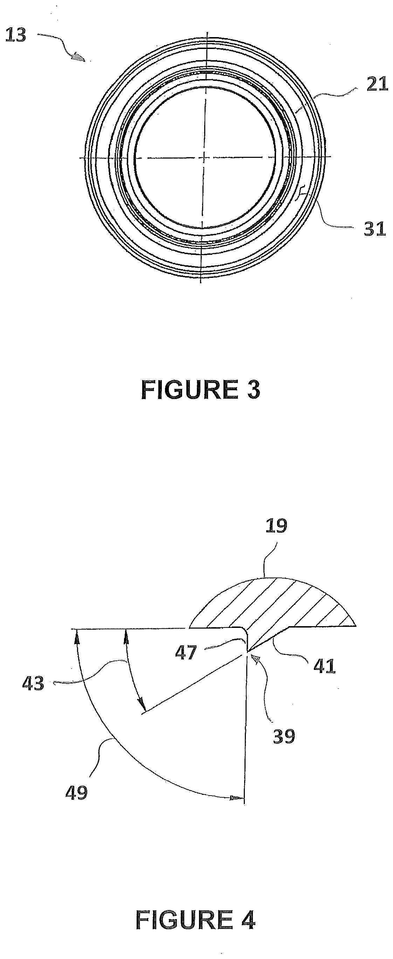

It can be seen in the figures that in this example, the threaded section (37) includes, according to the invention, a double start thread form. Each thread has a 4 mm pitch helix. With reference to Figure 4, it can be seen that the double start thread form has a relatively sharp crest (39), and that the thread form is asymmetric.

When viewed in cross section, as shown in Figure 4, it can also be seen that the thread form has a first face (41) which faces toward the free end (25) of its associated tail section (15). And the first face (41) lies at a first angle (43) of between fifteen degrees and sixty degrees to the principal axis (45) of its associated tail section (15), and in the example shown the first angle (43) is thirty degrees.

The thread form also has a second face (47) which faces away from the free end (25) of the tail section (15). The second face (47) lies at a second angle (49) of between eighty degrees and ninety degrees to the principal axis (45) of the tail section (15), and in the example shown the second angle (49) is ninety degrees.

It can be seen in the left hand side of **Figure 5** that there is an annular cavity (51) between the free ends of the collars (17a) and the tubular body (19) of the tail sections (15). A pipe (18) is pushed into each of the annular cavities (51) prior to swaging the free ends (17a) of the collars (17) to produce a sealed joint between the pipe (18) and the tubular body (19) - as shown on the right hand side of **Figure 5****.**

The soft aluminium alloy collars (17) obscure the circumferential ridges (21) and the threaded section (37) of each tail section (15) - compare the left hand side of the fitting in **Figure 5** with the right hand side after the pipe has been fully inserted. It is for this reason that it is not possible to visually confirm that a pipe (18) has been pushed fully home to butt against the shoulder (31) when making a joint using the pipe fitting assembly. That is why the threaded sections (37) are so important, as they allow the correct mating with a pipe (18) to be confirmed by feel, and the threaded sections (37) help to hold the pipe against the shoulder (31) while the installer uses one or both hands to use a swaging tool to complete the connection.

The pipe fitting assembly (11) provides a method of fitting a pipe to the pipe fitting assembly (11) of the first aspect of the invention, while at the same time checking and ensuring that the pipe is fully engaged with the tail section (15) of the pipe fitting assembly (11). The method includes the steps of;
- placing the end of a pipe over a tail section of the pipe fitting assembly, and within a swageable collar of the pipe fitting assembly,
- pushing the pipe firmly onto and over one or more circumferential ridges of the tail section until an increased level of resistance is felt,
- rotating the pipe relative to the pipe fitting assembly in a manner that produces engagement with a threaded section of the tail section and until it is felt that the pipe butts against a shoulder of the tail section, and then
- swaging the collar to secure and seal the pipe onto the tail section.

The method also allows a person to monitor the amount of rotation of the pipe relative to the pipe fitting assembly before it is felt that the pipe butts against a shoulder of the tail section, as a further indicator of proper engagement between the pipe and the pipe fitting assembly prior to swaging. For example, with the pipe fitting assembly (11) shown, the pipe will rotate a little over 180 degrees between initial engagement with the threaded section (37) and engagement between the end of the pipe and the shoulder (31).

The method can also include the step of attempting to pull the pipe off the tail section of the pipe fitting to ensure that positive engagement has been achieved, prior to swaging the collar.

### VARIATIONS

In the example described above, the pipe fitting assembly is a connector having two hollow tail sections. It is envisaged that the same design principles can be incorporated in other fittings for example elbow fittings, tee fittings, reducers, connectors to other plumbing systems, etc, in which the pipe connector fitting may only have one hollow tail section, or two, or more hollow tail sections.

In the example described above, the tail sections (15) are hollow to allow fluid to pass through. However, in the case of a plug type of fitting, i.e. to block the end of a pipe, the tail section may not be hollow.

### DEFINITIONS

Throughout this specification the word "comprise" and variations of that word, such as "comprises" and "comprising", are not intended to exclude other additives, components, integers or steps.

Throughout this specification the word "tail" is used to describe the part of a pipe fitting that is configured to mate with a pipe. A pipe fitting may have a single tail, or multiple tails, depending on the number of pipes that can be connected to the pipe fitting.

### ADVANTAGES

Thus it can be seen that at least the preferred form of the invention provides a pipe fitting assembly (11) which allows a plumber or fitter to positively confirm that a pipe has been sufficiently engaged with the pipe fitting assembly (11) prior to swaging the collar (17).

The positive confirmation can be achieved by feel, and in situations where the fitting and the pipe connection cannot easily be seen. The confirmation by feel is more positive than previous systems employed in pipe connection fittings since it is possible to feel for;
- the engagement with a thread form,
- the increased resistance to pushing the pipe further onto the fitting,
- the increased resistance to rotate the pipe relative to the pipe fitting assembly as the thread engages with the inside diameter of the pipe,
- the slight drawing in of the pipe onto the pipe fitting assembly as the thread on the fitting bites works its way deeper into the end of the pipe,
- the amount of rotation from when the thread form engages the pipe until the pipe contacts the shoulder of the fitting, and
- the positive change in resistance to rotation as the end of the pipe bottoms out against the shoulder of the tail section.

This combination of factors that can each be observed individually and distinctly by feel provides a significant improvement in determining positive confirmation that the pipe is fully engaged with the tail section when compared to previous systems that simply relied on minute changes in resistance as a pipe is pushed over a tail section of a fitting.

This combination of manually detectable features can be used to provide much improved assurance that the joint formed using the pipe connector fitting (11), will not leak or fail.

The positive grip between the pipe and the threaded section of the pipe fitting assembly, when the pipe is fully home on the tail section of the fitting, also provides a positive retention system to minimise the possibility that the pipe will slip off the fitting a little before the swaged collar is swaged to permanently hold the pipe on the fitting in its correct location.

## Claims

1. A pipe fitting assembly (11) having a body (13), the body having at least one tail section (15) configured to engage with a pipe (18); the pipe fitting assembly also having a swageable collar (17) associated with the or each tail section, the or each swageable collar being secured to the body and being positioned and configured in such a manner that the or each swageable collar can be swaged to secure a pipe onto the or each swageable collar's associated tail section; and the or each tail section includes one or more circumferential ridges (21) configured to provide a leak resistant seal between the pipe fitting assembly and the pipe when the respective swageable collar of the tail section is swaged, and the or each tail section includes a threaded section (37) configured to engage with and hold the pipe during installation and prior to swaging, the or each circumferential ridge being situated between the threaded section and the free end (25) of the respective tail section, **characterized in that** the threaded section (37) includes a double start thread form.

2. A pipe fitting assembly as claimed in claim 1, wherein the outside diameter of the or each threaded section is greater than the outside diameter of the or each circumferential ridge.

3. A pipe fitting assembly as claimed in claim 1 or claim 2, wherein the outside diameter of the or each threaded section is in the range of 1.5 to 4.0 percent greater than the outside diameter of the or each circumferential ridge.

4. A pipe fitting assembly as claimed in any one of claims 1 to 3, wherein the thread form of the or each threaded section has a relatively sharp crest (39).

5. A pipe fitting assembly as claimed in any one of claims 1 to 4, wherein the thread form of the or each threaded section is an asymmetric thread form.

6. A pipe fitting assembly as claimed in any one of claims 1 to 5, wherein the thread form of the or each threaded section, when viewed in cross section, has a first face (41) which faces toward the free end (25) of its associated tail section, the first face lying at an angle (43) of between fifteen degrees and sixty degrees to the principal axis (45) of the associated tail section.

7. A pipe fitting assembly as claimed in claim 5 or claim 6, wherein the thread form of the or each threaded section, when viewed in cross section, has a second face (47) which faces away from the free end of its associated tail section, the second face lying at an angle (49) of between eighty degrees and ninety degrees to the principal axis of the associated tail section.

8. A pipe fitting assembly as claimed in any one of claims 1 to 7, wherein the threaded section of each tail section is adjacent to a shoulder (31) of the associated tail section.

9. A pipe fitting assembly as claimed in claim 8, wherein the shoulder of the or each tail section is formed where the outside diameter of the tail section abruptly increases from a dimension similar to the inside diameter of a pipe to be connected to the pipe fitting assembly to a dimension similar to the outside diameter of the pipe.

10. A pipe fitting assembly as claimed in any one of claims 1 to 9, wherein the pipe fitting assembly is a connector, an elbow fitting, or a tee fitting.

11. A pipe fitting assembly as claimed in any one of claims 1 to 10, wherein the or each tail section is hollow.

12. A method of fitting a pipe (18) to a pipe fitting assembly (11) including the steps of;
• providing a pipe fitting assembly (11) according to any of Claims 1 to 11;
• placing the end of a pipe over a tail section (15) of the pipe fitting assembly,
• pushing the pipe firmly onto and over one or more circumferential ridges (21) of the tail section until an increased level of resistance is felt,
• rotating the pipe relative to the pipe fitting assembly in a manner that produces engagement with a threaded section (37) of the tail section and until it is felt that the pipe butts against a shoulder (31) of the tail section, and then
• swaging a collar (17) of the pipe fitting assembly to secure and seal the pipe on the tail section.

13. A method of fitting a pipe to a pipe fitting assembly as claimed in claim 12, wherein the method includes monitoring the amount of rotation of the pipe relative to the pipe fitting assembly once the pipe has engaged with the threaded section and before it is felt that the pipe butts against a shoulder of the tail section.

14. A method of fitting a pipe to a pipe fitting assembly as claimed in claim 12 or claim 13, wherein the method also includes the step of attempting to pull the pipe off the tail section of the pipe fitting to ensure that positive engagement has been achieved, prior to swaging the collar.

## Patentansprüche

1. Rohranschlussanordnung (11), die einen Körper (13) aufweist, wobei der Körper mindestens einen Endabschnitt (15) aufweist, der konfiguriert ist, um mit einem Rohr (18) ineinanderzugreifen; wobei die Rohranschlussanordnung auch eine stauchbare Schelle (17) aufweist, die dem oder jedem Endabschnitt zugeordnet ist, wobei die oder jede stauchbare Schelle so am Körper gesichert und so positioniert und konfiguriert ist, dass die oder jede stauchbare Schelle gestaucht werden kann, um ein Rohr auf den oder jeden der stauchbaren Schelle zugeordneten Endabschnitt zu sichern; und der oder jeder Endabschnitt enthält einen oder mehrere Umfangsstege (21), die konfiguriert sind, um eine auslaufsichere Dichtung zwischen der Rohranschlussanordnung und dem Rohr bereitzustellen, wenn die betreffende stauchbare Schelle des Endabschnitts gestaucht ist, und der oder jeder Endabschnitt enthält einen Gewindeabschnitt (37), der konfiguriert ist, während der Installation und vor dem Stauchen mit dem Rohr ineinanderzugreifen und es zu halten, wobei der oder jeder Umfangssteg zwischen dem Gewindeabschnitt und dem freien Ende (25) des jeweiligen Endabschnitts angeordnet ist, **dadurch gekennzeichnet, dass** der Gewindeabschnitt (37) eine zweigängige Gewindeform enthält.

2. Rohranschlussanordnung nach Anspruch 1, wobei der Außendurchmesser des oder jedes Gewindeabschnitts größer als der Außendurchmesser des oder jedes Umfangsstegs ist.

3. Rohranschlussanordnung nach Anspruch 1 oder Anspruch 2, wobei der Außendurchmesser des oder jedes Gewindeabschnitts im Bereich von 1,5 bis 4,0 Prozent größer als der Außendurchmesser des oder jedes Umfangsstegs ist.

4. Rohranschlussanordnung nach einem der Ansprüche 1 bis 3, wobei die Gewindeform des oder jedes Gewindeabschnitts eine relativ scharfe Gewindekrone (39) aufweist.

5. Rohranschlussanordnung nach einem der Ansprüche 1 bis 4, wobei die Gewindeform des oder jedes Gewindeabschnitts eine asymmetrische Gewindeform ist.

6. Rohranschlussanordnung nach einem der Ansprüche 1 bis 5, wobei die Gewindeform des oder jedes Gewindeabschnitts, im Querschnitt gesehen, eine erste Fläche (41) aufweist, die zum freien Ende (25) ihres zugeordneten Endabschnitts zeigt, wobei die erste Fläche in einem Winkel (43) zwischen fünfzehn Grad und sechzig Grad zur Hauptachse (45) des zugeordneten Endabschnitts liegt.

7. Rohranschlussanordnung nach Anspruch 5 oder Anspruch 6, wobei die Gewindeform des oder jedes Gewindeabschnitts, im Querschnitt gesehen, eine zweite Fläche (47) aufweist, die vom freien Ende ihres zugeordneten Endabschnitts weg zeigt, wobei die zweite Fläche in einem Winkel (49) zwischen achtzig Grad und neunzig Grad zur Hauptachse des zugeordneten Endabschnitts liegt.

8. Rohranschlussanordnung nach einem der Ansprüche 1 bis 7, wobei der Gewindeabschnitt jedes Endabschnitts an einem Absatz (31) des zugeordneten Endabschnitts anliegt.

9. Rohranschlussanordnung nach Anspruch 8, wobei der Absatz des oder jedes Endabschnitts geformt ist, wo der Außendurchmesser des Endabschnitts von einer dem Innendurchmesser eines mit der Rohranschlussanordnung zu verbindenden Rohrs ähnlichen Dimension abrupt auf eine dem Außendurchmesser des Rohrs ähnliche Dimension zunimmt.

10. Rohranschlussanordnung nach einem der Ansprüche 1 bis 9, wobei die Rohranschlussanordnung ein Anschlussstück, ein Kniestück oder ein T-Stück ist.

11. Rohranschlussanordnung nach einem der Ansprüche 1 bis 10, wobei der oder jeder Endabschnitt hohl ist.

12. Verfahren zum Anschließen eines Rohrs (18) an eine Rohranschlussanordnung (11), enthaltend die folgenden Schritte:
• ein Bereitstellen einer Rohranschlussanordnung (11) nach einem der Ansprüche 1 bis 11;
• ein Platzieren des Endes eines Rohrs über einen Endabschnitt (15) der Rohranschlussanordnung;
• ein festes Drücken des Rohrs auf und über einen oder mehrere Umfangsstege (21) des Endabschnitts, bis ein erhöhtes Maß an Widerstand zu fühlen ist;
• ein Drehen des Rohrs relativ zur Rohranschlussanordnung auf eine Art und Weise, die einen Eingriff mit einem Gewindeabschnitt (37) des Endabschnitts erzeugt und bis zu fühlen ist, dass das Rohr an einem Absatz (31) des Endabschnitts anschlägt, und dann
• ein Stauchen einer Schelle (17) der Rohranschlussanordnung, um das Rohr am Endabschnitt zu sichern und abzudichten.

13. Verfahren zum Anschließen eines Rohrs an eine Rohranschlussanordnung nach Anspruch 12, wobei das Verfahren ein Überwachen des Ausmaßes an Drehung des Rohrs relativ zur Rohranschlussanordnung enthält, sobald das Rohr mit dem Gewindeabschnitt ineinandergegriffen hat und bevor zu fühlen ist, dass das Rohr an einem Absatz des Endabschnitts anschlägt.

14. Verfahren zum Anschließen eines Rohrs an eine Rohranschlussanordnung nach Anspruch 12 oder Anspruch 13, wobei das Verfahren auch den Schritt des Versuchens enthält, das Rohr vom Endabschnitt des Rohranschlusses zu ziehen, um sicherzustellen, dass ein positiver Eingriff erzielt wurde, bevor die Schelle gestaucht wird.

## Revendications

1. Ensemble de raccordement de tuyaux (11) ayant un corps (13), le corps comportant au moins une section de queue (15) configurée pour s'engager avec un tuyau (18) ; l'ensemble de raccordement de tuyaux ayant également un collet sertissable (17) associé à la section de queue ou à chacune d'entre elles, le collet sertissable ou chacun d'entre eux étant fixé au corps et étant positionné et configuré de telle manière que le collet sertissable ou chacun d'entre eux peut être serti pour attacher un tuyau à la section de queue du collet sertissable ou de chacun d'entre eux ; et la section de queue ou chacune d'entre elles comprenant une ou plusieurs nervures circonférentielles (21) configurées pour procurer un joint étanche entre l'ensemble de raccordement de tuyaux et le tuyau quand le collet sertissable respectif de la section de queue est serti, et la section de queue ou chacune d'entre elles comprenant une section filetée (37) configurée pour s'engager avec le tuyau et le maintenir durant l'installation et avant le sertissage, la nervure circonférentielle ou chacune d'entre elles étant située entre la section filetée et l'extrémité libre (25) de la section de queue respective, **caractérisé en ce que** la section filetée (37) comprend une forme de filet à double départ.

2. Ensemble de raccordement de tuyaux selon la revendication 1, dans lequel le diamètre externe de la section filetée ou de chacune d'entre elles est supérieur au diamètre externe de la nervure circonférentielle ou de chacune d'entre elles.

3. Ensemble de raccordement de tuyaux selon la revendication 1 ou 2, dans lequel le diamètre externe de la section filetée ou de chacune d'entre elles est compris dans une plage de 1,5 à 4,0 % supérieure au diamètre externe de la nervure circonférentielle ou de chacune d'entre elles.

4. Ensemble de raccordement de tuyaux selon l'une quelconque des revendications 1 à 3, dans lequel la forme de filet de la section filetée ou de chacune d'entre elles présente une arête relativement fine (39).

5. Ensemble de raccordement de tuyaux selon l'une quelconque des revendications 1 à 4, dans lequel la forme de filet de la section filetée ou de chacune d'entre elles est une forme de filet asymétrique.

6. Ensemble de raccordement de tuyaux selon l'une quelconque des revendications 1 à 5, dans lequel la forme de filet de la section filetée ou de chacune d'entre elles, vue en section transversale, présente une première face (41) qui fait face à l'extrémité libre (25) de sa section de queue associée, la première face présentant un angle (43) compris entre quinze et soixante degrés par rapport à l'axe principal (45) de la section de queue associée.

7. Ensemble de raccordement de tuyaux selon la revendication 5 ou 6, dans lequel la forme de filet de la section filetée ou de chacune d'entre elles, vue en section transversale, présente une deuxième face (47) qui est opposée à l'extrémité libre de sa section de queue associée, la deuxième face présentant un angle (49) compris entre quatre-vingts et quatre-vingt-dix degrés par rapport à l'axe principal de la section de queue associée.

8. Ensemble de raccordement de tuyaux selon l'une quelconque des revendications 1 à 7, dans lequel la section filetée de chaque section de queue est adjacente à un épaulement (31) de la section de queue associée.

9. Ensemble de raccordement de tuyaux selon la revendication 8, dans lequel l'épaulement de la section de queue ou de chacune d'entre elles est formé là où le diamètre externe de la section de queue augmente brusquement d'une dimension similaire au diamètre interne d'un tuyau à connecter à l'ensemble de raccordement de tuyaux à une dimension similaire au diamètre externe dudit tuyau.

10. Ensemble de raccordement de tuyaux selon l'une quelconque des revendications 1 à 9, dans lequel l'ensemble de raccordement de tuyaux est un connecteur, un raccord coudé ou un raccord en té.

11. Ensemble de raccordement de tuyaux selon l'une quelconque des revendications 1 à 10, dans lequel la section de queue ou chacune d'entre elles est creuse.

12. Procédé de raccordement d'un tuyau (18) à un ensemble de raccordement de tuyaux (11) comprenant les étapes suivantes :
• fourniture d'un ensemble de raccordement de tuyaux (11) selon l'une quelconque des revendications 1 à 11 ;
• placement de l'extrémité d'un tuyau sur la section de queue (15) de l'ensemble de raccordement de tuyaux,
• poussée ferme du tuyau sur une ou plusieurs nervures circonférentielles (21) de la section de queue et par-dessus celles-ci jusqu'à ce qu'un niveau de résistance plus élevé soit ressenti,
• rotation du tuyau par rapport à l'ensemble de raccordement de tuyaux de manière à produire un engagement avec une section filetée (37) de la section de queue et jusqu'à ce qu'une butée du tuyau contre un épaulement (31) de la section de queue soit ressenti, puis
• sertissage d'un collet (17) de l'ensemble de raccordement de tuyaux pour fixer et sceller le tuyau sur la section de queue.

13. Procédé de raccordement d'un tuyau à un ensemble de raccordement de tuyaux selon la revendication 12, dans lequel le procédé comprend l'observation de la quantité de rotation du tuyau par rapport à l'ensemble de raccordement de tuyaux une fois que le tuyau est engagé avec la section filetée et avant qu'une butée du tuyau contre un épaulement de la section de queue ne soit ressenti.

14. Procédé de raccordement d'un tuyau à un ensemble de raccordement de tuyaux selon la revendication 12 ou 13, dans lequel le procédé comprend également l'étape consistant à tenter de retirer le tuyau de la section de queue du raccord de tuyau pour s'assurer qu'un engagement positif a été obtenu avant de sertir le collet.
